# EUROPEAN PATENT APPLICATION

(11) **EP 1 498 833 A1**
(43) Date of publication of application: **19.01.2005**
(21) Application number: 03747202.4
(22) Date of filing: 28.03.2003
(51) Int. Cl.: G06F 17/60

(54) **CONSIDERATION PAYMENT MANAGEMENT METHOD AND SERVER, CONSIDERATION PAYMENT MANAGEMENT PROGRAM AND COMPUTER-READABLE RECORDING MEDIUM, AND CONSIDERATION PAYMENT MANAGEMENT MEDIUM AND CONSIDERATION PAYMENT RECORDING MEDIUM**

(30) Priority: 29.03.2002 JP 2002093646
(71) Applicant: Space Big Van Co., Ltd., Sakyou-ku, Kyoto-shi, Kyoto 606-8022 (JP)
(72) Inventor: OOBAN, Toshikazu, Space Big Van Co., Ltd., Sakyou-ku, Kyoto-shi, Kyoto 606-8022 (JP)
(74) Representative: Foster, Mark Charles
(86) International application number: PCT/JP2003/003977
(87) International publication number: WO 2003/091921

(57) **Abstract**

The invention proposes a counter value payment managing method and a server therefore, which relieves a payer from shouldering the payment of counter values. Further, the invention proposes a value payment managing program, a computer-readable recording medium, a value payment managing medium, and a value payment recording medium. The method manages the payment of a counter value from a payer to a payee by granting a credit limit corresponding to the counter value, and is executed by a server which receives a payee's counter value, sets a credit limit on the basis of the counter value, receives payee's credit transaction values, calculates a sum of guarantee money to be paid by the payer on the basis of the credit transaction values, and updates the credit limit by deducting the calculated guarantee money from the credit limit. The payer may grant a credit limit corresponding to a counter value to a payee, so that payer can pay a necessary sum of money to the payee within the counter value whenever the payee wishes. Therefore, the payer is not required to prepare an entire amount of money on a day when the counter value is paid, which relieves the payer from the burden of paying the counter value.

## Description

### FIELD OF THE INVENTION

The present invention relates to the management of counter values to be paid for commodities, services or labor, and more particularly to management of a credit limit which is granted by a payer to a payee.

### BACKGROUND OF THE INVENTION

Usually, a wage of an employee (payee) working for a company is paid by cash or is paid into the employee's bank account on a payday. In other words, an employer (payer) should prepare money corresponding to the employee's wage by a predetermined payday.

Up to now, there have been proposed methods in which an employee's wage is correlated to a credit limit granted by an employer, the employer makes a temporal payment on behalf of the employee for goods bought by the employee, and the employee's wage is appropriated to the temporarily paid charges. (Refer to Japanese Patent Laid-Open Publication No. 2002-074213, for example.)

However, the employee does not always spend an entire amount of his or her wage at a time, and tends to spend a part thereof, so that a non-spent part of the wage remains on hand, or is left as savings in the employee's bank account.

In other words, a manager of a company pays the wage on the specified date including money which is not necessary to the employee for the time being. The more ratio of wages to a benefit of the company, the more harder the payment of wages for the company. If it is possible to reserve the sum of money which is unnecessary for the employee for the time being, the manager will be relieved from a burden of paying the wages.

The same holds true to commercial transactions between companies. For instance, it is assumed that a purchaser (payer) is not always required to prepare a sum of money to be settled on a specified date, and a selling agent (payee) can reserve in the purchaser the money, which is not necessary for time being, in the purchaser. In such a case, the purchaser is relieved from paying the price.

The invention has been contemplated to overcome problems of the related art, and is intended to provide a counter value payment managing method and a server therefor, a counter value payment managing program, a computer-readable recording medium, a counter value payment managing medium, and a value payment recording medium.

### SUMMARY OF THE INVENTION

There is provided a method of managing the payment of a counter value from a payer to a payee by granting a credit limit corresponding to the counter value. The method is executed by a server which receives a payee's counter value, sets a credit limit on the basis of the amount of the counter value, receives payee's transaction values related to credit dealings, calculates a sum of guarantee money to be paid by the payer on the basis of the transaction values, and updates the credit limit by deducting the calculated guarantee money from the credit limit. A further counter value payment managing method is executed by a server which receives a payee's counter value, sets a new credit limit by adding the counter value to a stored credit limit, receives transaction values related to credit dealings, calculates sum of guarantee money to be paid by the payer on the basis of the transaction values, and updates the credit limit by deducting the calculated guarantee money from the credit limit.

The payer can pay necessary money to the payee within his or her credit limit whenever the payee wishes. Therefore, the payer does not have to prepare an entire amount of money on a specified day, which relieve the burden of paying the counter value on a payday.

A still further method is executed by a server which receives a payee's counter value and an additional credit limit, sets a credit limit on the basis of the counter value and the additional credit limit, receives payee's transaction values related to credit dealings, calculates guarantee money to be paid by the payer on the basis of the transaction values, and updates the credit limit by deducting the calculated guarantee money from the credit limit.

The foregoing method enables the payee to buy goods on credit dealings beyond the payee's counter value. In other words, the payer can grant the payee a credit limit above his or her counter value.

### BRIEF DESCRIPTION OF THE DRAWINGS

Fig. 1 is a flowchart showing a procedure for determining a credit limit in a counter value payment managing method according to the invention.
Fig. 2 is a flowchart showing how a counter value (a wage) is paid by granting the credit limit.
Fig. 3 shows the relationship between transaction values related to credit dealings and guarantee money to be paid by a payer.
Fig. 4 shows an example of a payslip distributed by an employer to an employee.
Fig. 5 is a block diagram of a counter value payment managing server of the invention.
Fig. 6 is a flowchart of the counter value payment managing method.
Fig. 7(a) and Fig. 7(b) show credit limits managed by the counter value payment managing server.
Fig. 8 is a flowchart showing how to settle accounts using an existing credit card.
Fig. 9 is a flowchart showing how to settle accounts using an existing debit card.
Fig. 10 shows another example of a payslip.
Fig. 11 shows how to pay a credit transaction value in installment within a credit limit.
Fig. 12 shows another example for paying a credit transaction value in installment within the credit limit.
Fig. 13 shows a still further example for paying a credit transaction value in installment within the credit limit.
Fig. 14 describes how to transfer a credit limit after the credit dealing.
Fig. 15 shows another example to transfer credit limits after credit dealings.
Fig. 16 shows a further example to transfer credit limits after credit dealings.
Fig. 17 is a flowchart showing an example to make a credit limit inquiry.
Fig. 18 is a flowchart showing how to transfer a credit limit.
Fig. 19(a) and Fig. 19(b) show credit limit reviewing screens.

### BEST MODE FOR EMBODYING THE INVENTION

The invention will be described hereinafter with reference to a counter value payment managing method, a server applied to the method, a counter value payment managing program, a computer-readable recording medium, a counter value payment managing medium, and a counter value payment recording medium. Reference will be made to the drawings.

According to the invention, a counter value is paid by a payer to a payee after the payer grants a credit limit corresponding to the counter value. In other words, the payer guarantees payment of guarantee money to a business company, to whom the payee deals on credit, within the credit limit. (The relationship between a transaction value and guarantee money will be described later.)

Specifically, the payer pays the counter values to the business company which performs credit dealings with the payee, but not to the payee.

The term "counter value payment management" denotes to manage the payment of the counter values within the credit limit, i.e. the payer manages the credit limit granted to the payee. The counter value represents a sum of money to be paid by the payer to the payee.

It is assumed here that the counter value is a wage which is paid by an employer (payer) to an employee (payee).

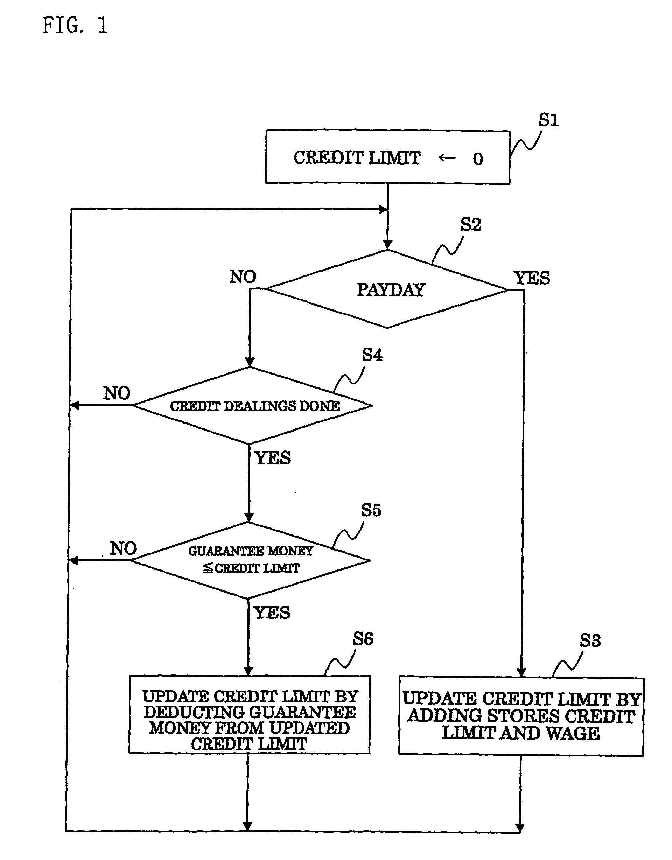

Referring to Fig. 1, the employee has no credit limit up to now, i.e. the credit limit is 0 prior to a payday of a first wage (step S1).

On the payday, the credit limit corresponding to the wage is granted to the employee. If the employee has a credit limit, a new credit limit is determined by adding a credit limit corresponding to the wage to the existing credit limit (steps S2 and S3).

On the other hand, if the employee has credit dealings with a business connection, guarantee money related to the credit dealings is deducted from the existing credit limit, and a new credit limit is granted (steps S4, S5 and S6).

The following describe an example in which an employee A (whose monthly pay is ¥500,000) has bought goods (whose price is ¥50,000) from an affiliated store D on credit, and a business company B (an employer of the employee A) pays the cost on behalf of the employee A.

The business company B (called the "company B") closes its account on the last day of every month, and makes payments on the same day. In this example, the March wage (¥500,000) of the employee B is granted as a credit limit of ¥500,000 on March 31.

Since the wage of the employee A is not actually paid on March 31, the company B accounts up a non-paid wage ¥500,000 in view of financial management, and reserves ¥500,000 therein.

The invention is also applicable to managing daily wages for not only employees but also students doing after-school jobs in a business company, for example.

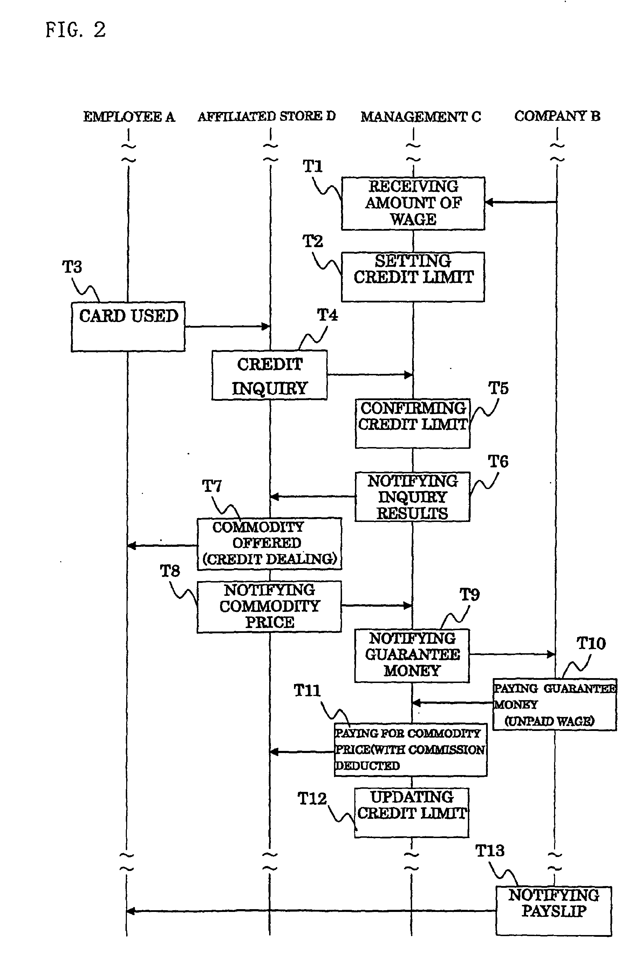

In Fig. 2, a management C manages the payment of wages to employees in response to the company B's request. The company B may serve as the management C in the invention.

The company B informs the management C of information identifying the employee A (i.e. an identification code in this embodiment) and the wage of ¥500,000 (step T1).

Alternatively, the foregoing information may be notified to the management C on any day. If the employee A is on the fixed pay basis, the company B may inform the management C of the wage only when the wage fluctuates due to pay raise and so on.

The management C sets a credit limit corresponding to the employee's wage (step T2). In such a case, it is preferable for the management C to perform a preliminary review of the company B in order to confirm a paying capacity of the company B with respect to the credit dealings between the employee A and the business connection.

Thereafter, the management C provides the employee A with a card which serves as a counter value payment managing medium. The card stores identification data (e.g. an employee code 1) for identifying the employee A.

The card may be a magnetic card, a contact or non-contact type IC card, or paper medium so long as it stores the information concerning the employee A.

Alternatively, any recording medium is usable so long as its stores the employee's information.

Further, the management C may issue a plurality of cards to the employee A, so that they may be used by family members of the employee A.

When a plurality of cards are issued, they may store not only the information for identifying the employee A but also information concerning credit limits granted to the respective cards (i.e. parts of the credit limit of the employee A). The latter information is effective in enabling the management C or the employee A to figure out how respective members use money within the credit limits. In this case, the invention can be designed in order that the employee A may inform the management C of the number of issued cards and credit limits of the respective cards, the management C may determine the foregoing items beforehand. This enables the employee A to give the cards to his or her family members, to make them use money within the credit limits, and to recognize their financial states.

The management C issues the card (or cards) to the employee A when it is informed of the employee A's wage by the company B, or in response to the employee A's request.

The information for identifying the employee A may be independently determined by the management C or be determined by the employee A by himself or herself.

Further, the card may be a card issued by the company B to the employee C (e.g. an employee ID card). In such a case, it is preferable for the company B to notify the management C of the information for identifying the employee A (i.e. employee identification code) which has been stored in the employee ID card.

The employee A buys goods at an affiliated store D (called the store D) using the card (step T1). The store D informs the management C of the cost ¥50,000 of the goods and of the identification code of the employee A, and inquires whether or not the management C endorses the settlement of the cost of the goods (step T4).

The management C confirms the credit limit of the employee A (step T5), and informs the store D whether or not the transaction value is within the credit limit, i.e. whether or not the management C endorses the settlement of the cost (step T6).

After confirming the endorsement of the management C, the store D sells the goods to the employee A (step T7), and notifies the management C of the cost of the goods (step T8).

The foregoing procedure in steps (T3) to (T8) in Fig. 2 is similar to that related to the payment using an existing credit card.

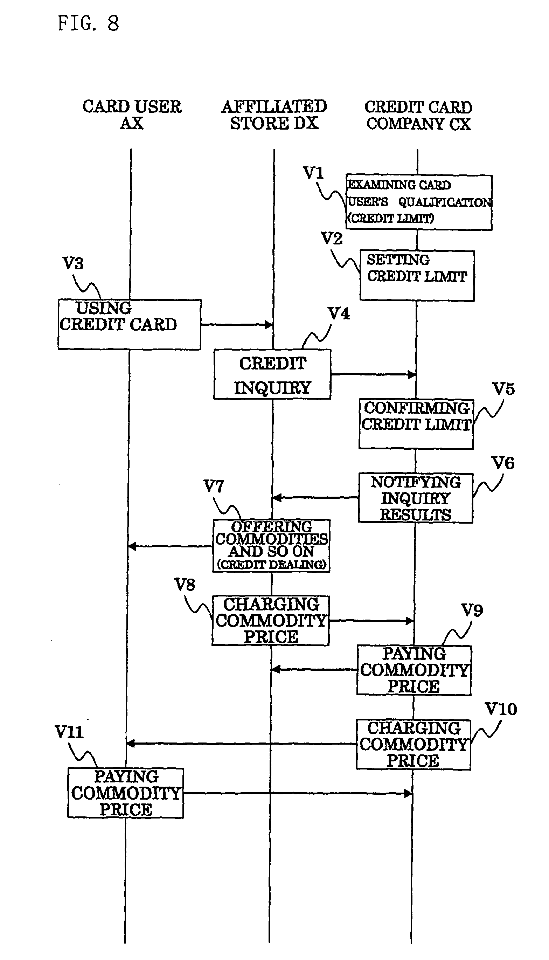

Fig. 8 shows an example of an existing procedure of the credit dealing using the credit card. In this example, it is assumed that a user AX has a credit card issued by a consumer credit company CX and that a store DX is affiliated to the consumer credit company CX. The user CX buys goods at the store DX using his or her credit card (steps V1 to V7). The store DX charges the cost of the goods to the consumer credit company CX (step V8), and collects money therefrom (step V9). In this case, the consumer credit company CX may sometimes pay the amount after deducting an affiliation fee from the cost of the goods. The consumer credit company CX sends a bill to the user AX (step V10), and collects the bill (step V11).

As will be described later, the invention differs from the existing credit card payment as follows: the user or the employee A buys goods using his or her card, but the business company B pays the bill as a part of the employee's wage.

Similarly, the invention also differs from the debit card dealing in which the consumer pays a bill as well as buys goods.

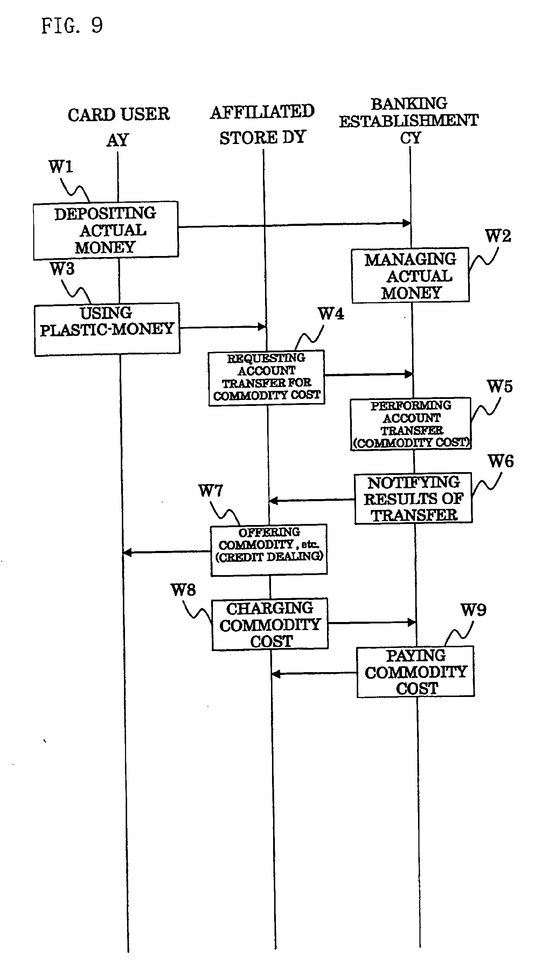

Fig. 9 shows a procedure related to a debit card dealing. A card holder AY has deposited money beforehand in his or her account in a banking establishment CY (steps W1 and W2). The card holder AY buys goods using his or her debit card at a store DY which is affiliated to the banking establishment CY (steps W3 to W7). In response to the request of the store DY, the banking establishment CY transfers the transaction value from the card holder AY's account to a settlement account, and pays the bill to the store DY (steps W8 and W9).

Referring back to Fig. 2, the management C calculates guarantee money to be paid by the company B on the basis of the bill from the store D (step T9).

The following describe the relationship between a transaction value related to the credit dealing (between the employee A and the store D) and the guarantee money to be paid by the company B for the credit dealing.

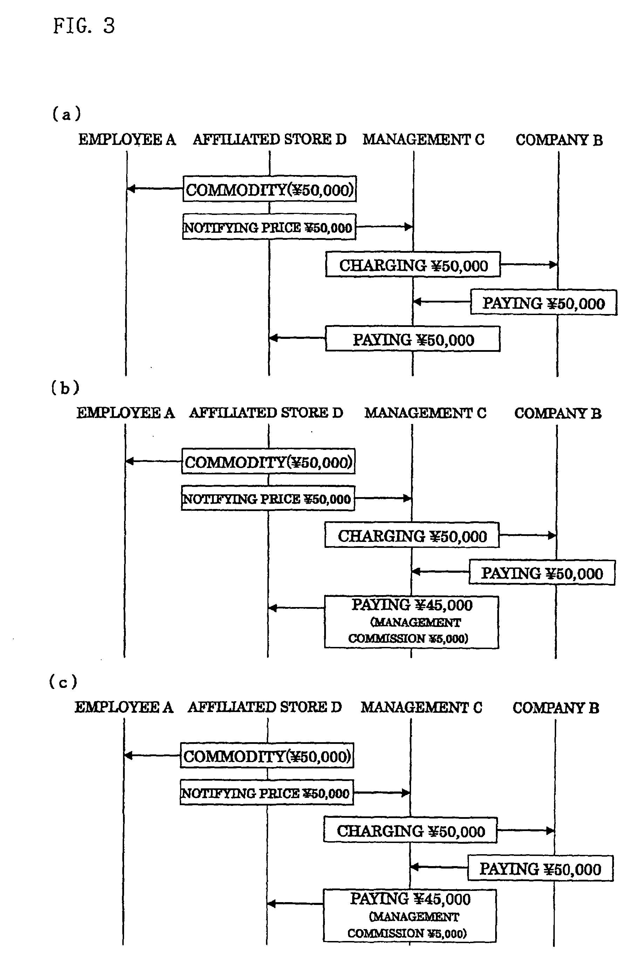

In Fig. 3(a) and Fig. 3(b), the transaction value related to the credit dealing (called the "credit transaction value) is equal to the guarantee money while in Fig. 3(c) they are not equal. Further, in Fig. 3(a), no commission charge is paid to the management C while in Figs. 3(b) and (c), commission charges are paid.

Any other relationship may be established between the credit transaction value and the guarantee money. In the invention, the company B pays the guarantee money as a part of the employee A's wage.

The following describe the case shown in Fig. 3(a), in which the credit transaction value is equal to the guarantee money, and no commission charge is paid to the management C.

The company B pays the guarantee money calculated on the basis of the cost of the goods to the management C (step T10), which pays for the cost to the store D (step T11).

In this state, the company B has paid ¥50,000 out of the employee A's wage ¥500,000, so that an unpaid wage for the employee A is ¥450,000.

The management C may pay the bill to the store D (step T11) before or after receiving the guarantee money from the company B (step T10).

Thereafter, the management C sets a new credit limit of ¥450,000 by deducting ¥50,000 from the current credit limit ¥500,000 of the employee A (step T12).

Each time the employee A performs a credit dealing at the store D, the management C calculates the guarantee money based on the credit transaction value, and deducts the guarantee money from the credit limit of the employee A.

The employee A may perform credit dealings with a plurality of stores affiliated with the management C.

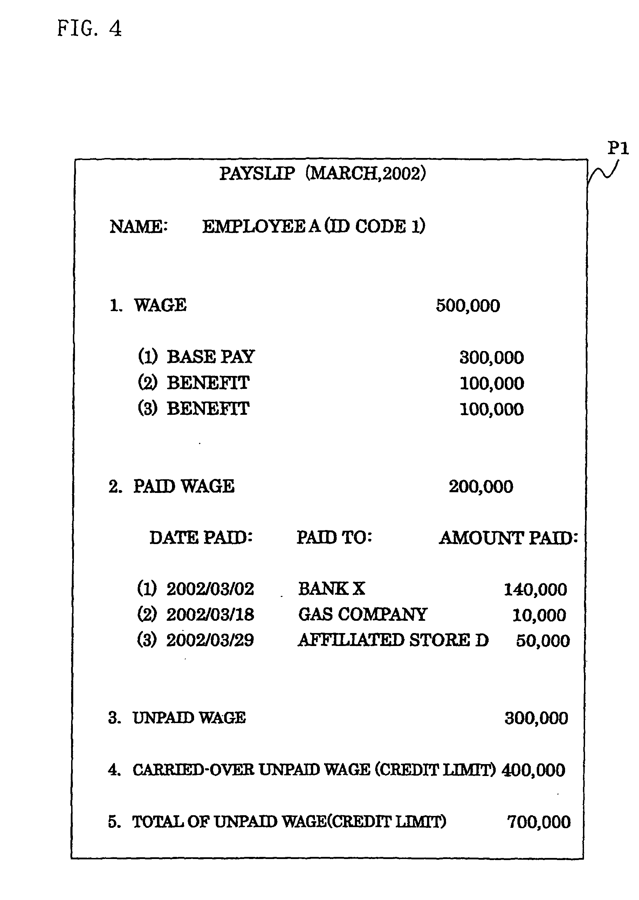

The management B informs the employee A of the payment (step T13). Fig. 4 shows a payslip P1 (for March, 2003) handed out to the employee A by the company B.

The payslip P1 indicates that: March wage (a credit limit) is ¥500,000; the paid wage is ¥200,000; unpaid wage is ¥00,000 as of March; brought-over unpaid wage is ¥400,000 at the end of February; and a total of unpaid wage is ¥700,000 at the end of March. In other words, the company B has paid ¥200,000 as the guarantee money for the month of March out of the employee A's wage ¥500,000, the unpaid wage is ¥300,000 (=¥500,000 - ¥200,000), so that the employee A has a credit limit of ¥700,000 at the end of March {¥700,000=(unpaid wage of ¥300,000 for March) + (brought-over unpaid wage of ¥400,000 at the end of February)}.

The payslip P1 also indicates details of paid wages, i.e. paid dates of the guarantee money and payee of the guarantee money.

The counter value payment managing medium may be an electronic information recording medium such as Web screens as well as sheet medium.

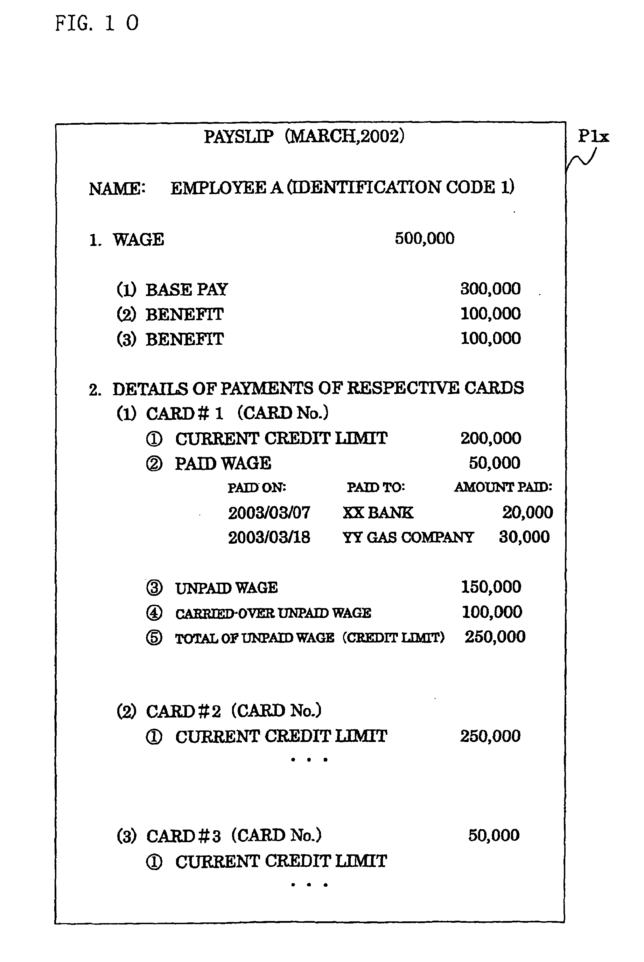

Fig. 10 shows another payslip P1x, which indicates that three cards have been issued to the employee A. The payslip P1x indicates details of payment: the wage (¥500,000) of the employee A is allocated to the cards #1, #2 and #3 as current credit limits in the amount of ¥200,000, ¥250,000 and ¥50,000, respectively. Details of each card indicate the credit limit as of March, paid wage, unpaid wage, brought-over unpaid wage and a total credit limit. In card #1, the credit limit is ¥200,000 as of March; ¥50,000 was paid; and a total of ¥250,000 (a balance of ¥150,000 and the brought-over unpaid wage ¥100,000) exists as an unpaid wage.

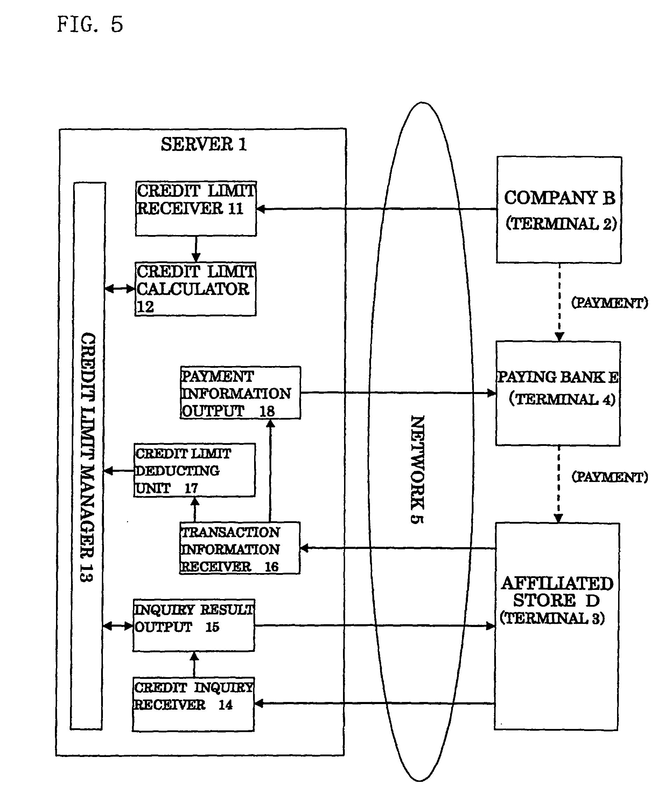

Referring to Fig. 5, a counter value payment managing server 1 (called the "server 1") is used for the management C to manage the credit limit of the employee A. The server 1 connects to terminals 2, 3 and 4 via a communication network 5. The terminals 2 to 4 are used by the company B, store D and banking establishment E, respectively, in order to gain access to the server 1.

The banking establishment E clears up credit transaction values of the employee A between the company B and the store D. Specifically, the management C quotes the guarantee money to the banking establishment E. Thereafter, the banking establishment E transfers funds to the store D from the company B, and notifies the management C that settlement has been completed.

According to the invention, the company B, management C and banking establishment E are not always separate bodies. For instance, the management C may serve as the banking establishment E, or the company B, management C and banking establishment E may be same body.

The communication network 5 may be a computer network such as Internet or LAN. The server 1 and terminals 2 to 4 may be connected to the communication network 5 via dedicated lines (not shown), a public telephone network (PSTN), a radio telephone network, a CATV network, a satellite communication network or the like.

The terminals 2 to 4 may be any data processing units which are communicative with the server 1 via the communication network 5, e.g. personal computers, PDAs (personal digital assistants) having data communication functions, portable phones, or the like.

The server 1 may be any computer which is communicative with the terminals 2 to 4 via the communication network 5, e.g. a personal computer.

The server 1 carries out the counter value payment managing method in accordance with a value payment managing program (called the "program"), which is a computer-readable recording medium and controls the operation of various units.

The program enables any computer (not shown) to function as the server 1 to carry out the counter value payment managing method of the invention.

The server 1 comprises a credit limit receiver 11, a credit limit calculator 12, a credit limit manager 13, a credit inquiry receiver 14, an inquiry result output unit 15, a transaction information receiver 16, a credit limit deducting unit 17, and a payment instruction output 18.

The credit limit receiver 11 receives information concerning the employee A's credit limit. The credit limit information is necessary for the management C to set up the credit limit of the employee A, and includes at least information specifying the employee A and an employee A's wage.

The credit limit calculator 12 calculates a new credit limit of the employee A by adding his or her wage and his or her existing credit limit which has been managed by the server 1.

The credit limit manager 13 stores the credit limit of the employee A.

The credit inquiry receiver 14 receives inquiries concerning the employee A's credit limit. The credit inquiry is important for the management C to determine whether or not to guarantee the payment to the store D for goods bought by the employee A by the credit dealing. This information includes at least data specifying the employee A and the credit transaction value.

The inquiry result output unit 15 provides the management C with an answer in response to the credit inquiry, and informs whether or not the management C guarantees the payment of the credit transaction value for the store D with respect to the employee A's credit dealing.

The transaction information receiver 16 receives the credit transaction information, and calculates a sum of guarantee money on the basis of the received information. The transaction information includes at least the data specifying the employee A and the credit transaction value. Further, the credit transaction information may include information concerning purchased goods (e.g. a name thereof), information on the store D (e.g. a name thereof), information concerning divided payments (which will be described later), and so on.

The credit limit deducting unit 17 deducts the guarantee money from the credit limit.

The payment information output 18 outputs payment information, which is necessary for paying the guarantee money, and include at least a payment method (an account number of the store D in the banking establishment) as well as the guarantee money.

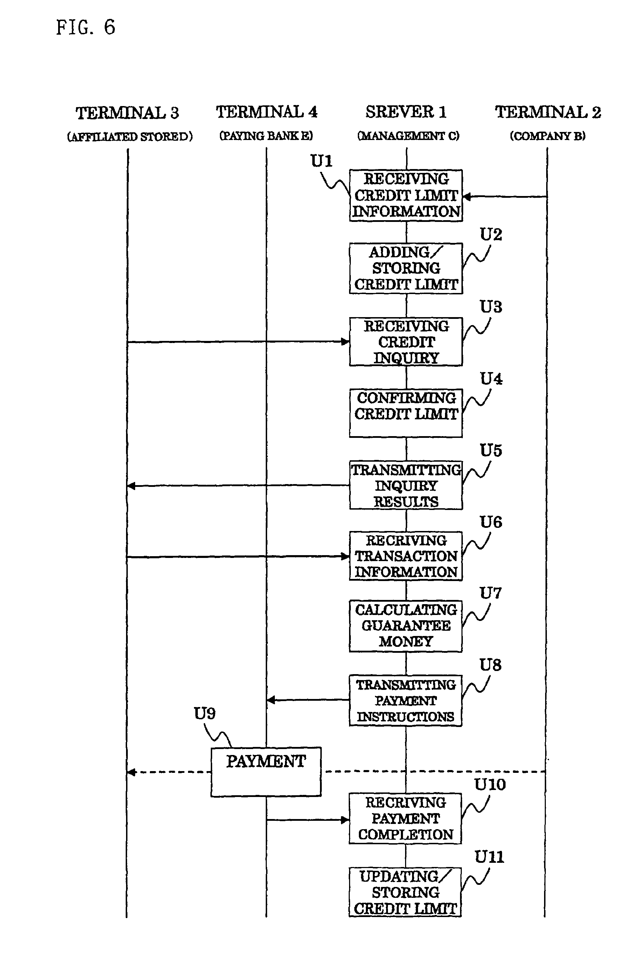

Referring to Fig. 6, the server 1 receives credit limit information from the terminal 2 via the credit limit receiver 11 (step U1). Using the credit limit calculator 12, the server 1 adds the employee A's credit limit (stored in the credit limit manager 13) to the employee A's wage (included in the received credit limit information), and stores the added result as a new credit limit in the credit limit manager 13 (step U2).

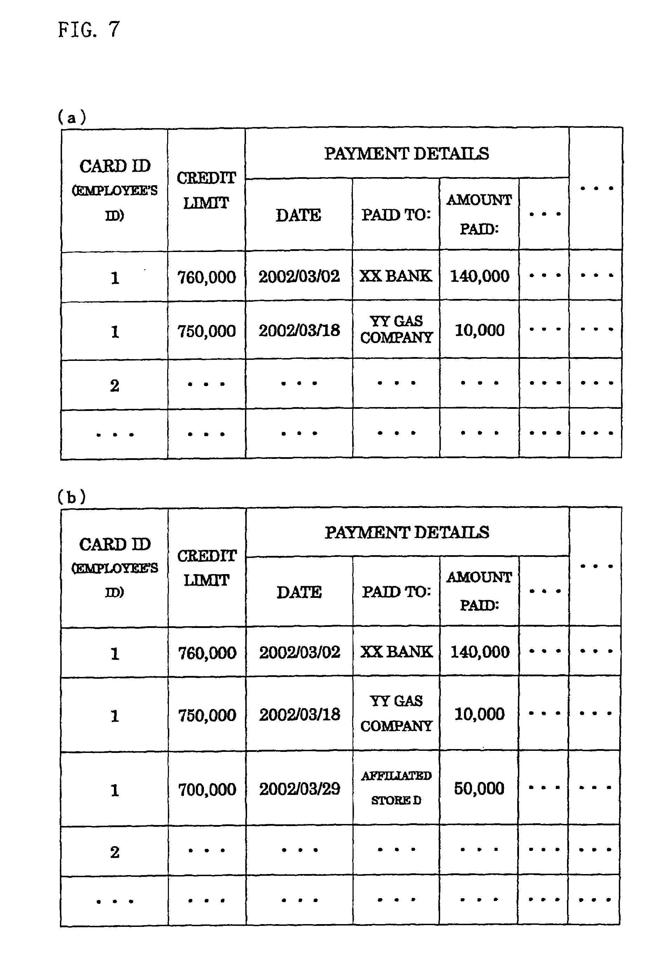

Fig. 7(a) and Fig. 7(b) show credit limits stored in the credit limit manager 13.

The credit limit manager 13 stores the credit limit of each card holder, i.e. each employee whose wage is paid under control of the server 1, together with details of payments (alternatively, only the credit limit may be managed). The server 1 searches the credit limit manager 13 on the basis of the information for identifying the employee A, and extracts the information concerning the employee A.

Referring to Fig. 7(a), the employee A performed two credit dealings in March, and does not buy anything at the store D, so that he or she has the credit limit of ¥750,000.

Fig. 7(b) shows that the employee A bought goods at the store D, which will be described later.

When the employee A uses the card at the store D, the server 1 receives a credit limit inquiry from the terminal 3 via the credit limit inquiry receiver 14 (step U3).

The terminal 3 sends not only information concerning the employee A and read from the card but also the price of the goods bought via the communication network 5.

The server 1 confirms the employee A's credit limit using the inquiry result output 15, i.e. compares the cost of the bought goods to the credit limit, and sends the results (i.e. whether or not the payment is guaranteed) to the terminal 3 (step U5).

When the store D sells the goods to the employee A on the credit dealing, the server 1 receives the transaction information from the terminal 2 via the transaction information receiver 16 (step U6), and calculates guarantee money on the basis of the cost of the goods included in the transaction information (step U7). Thereafter, the server 1 sends the payment information to the terminal 4 (step U8).

When the guarantee money is paid between the company B and the store D (step U9), the terminal 4 informs the server 1 of the payment (step U10) using a device (not shown). Thereafter, the server 1 deducts the guarantee money from the credit limit in order to update the credit limit using the credit limit deducting unit 7, and stores the updated credit limit in the credit limit manager 13 (step U11). In this case, details of payments (dates, payee, amount of payment (guarantee money) are stored in the credit limit manager 13. Refer to Fig. 7(b).

Alternatively, the server 1 may provide the terminal 2 with the employee A's information on the credit dealings stored in the credit limit manager 13. For instance, the company B can prepare the payslip P1 (shown in Fig. 4) for the employee A on the basis of the foregoing information.

Further, the server 1 may be provided with a unit which issues the payslip P1 on the basis of the information stored in the credit limit manager 13. The payslip P1 may be printed by a printer (not shown), may be e-mailed as electronic data, or may be sent as a Web screen. This will alleviate the burden of the company B to prepare the payslip P1 for the employee A.

An accountant or the like of the company B may connect to the server 1 via the terminal 2 in order to receive the credit dealing information of the employee A, or the employee A may gain access to the server 1 via a terminal (not shown), thereby receiving the foregoing information. In such a case, the server 1 functions as a so-called Web server, refers to the credit limit manager 13 via a device (not shown), and prepares a Web screen like the payslip P1. The accountant of the company B or the employee A may review the Web screen concerning the credit dealings of the employee A.

The server 1 may periodically transmit the credit dealing information (e.g. on paydays), or may transmit the information at odd intervals (e.g. either the accountant or the employee A may gain access to the server 1 at any time in order to review the Web screen).

Further, the credit dealing information of the employee A to be sent to the company B may include at least the guarantee money. Any other information concerning the payee or the like may be informed only to the employee A but not to the company B, so that only the employee A can confirm histories of his or her credit dealings.

In the foregoing embodiment, the credit limit of ¥300,000 is granted to the employee A as of March 31, 2002, i.e. = ¥500,000 (March wage) - ¥200,000 (paid as the guarantee money in March). Alternatively, the credit limit on March 31, 2002 may be a difference between the March wage and a total of guarantee money in February, 2002.

According to the invention, the employee A, company B, store D and banking establishment E may communicate with the management C by means other than the communication network 5. For instance, the company B may mail a sheet indicating the employee A's wage to the management C, which enables the management C to input the wage of the employee A in the server 1.

The store D is referred to as a business connection from which the employee A buys goods in the foregoing embodiment. The business connection may be a banking establishment, for example, in place of the store D. For instance, the employee A may use the card and take cash out of a cash dispenser of a banking establishment. Thereafter, the company B may pay the amount corresponding to the withdrawn money to the banking establishment via the management C.

The card issued by the management C is used for the employee A to perform credit dealings. However, the card is not always necessary in the invention. It is only necessary to enable a business connection with which the employee A performs credit dealings to confirm the information for identifying the employee A. For instance, the employee A may orally inform a worker of a business connection of his or her identification code, or may input the identification code using his or her computer in order to perform so-called Internet shopping.

Since the credit limit corresponding to the employee A's wage is granted to the employee A, the company B can make payments within the wage whenever the employee A wishes. As a result, the company B does not have to prepare entire amount of money to pay the wage on the payday, which will alleviate the burden on the company B.

On the other hand, the employee A can lend a part of his wage, which is not necessary for the time being, to the company B. If the company B pays an interest to the debt, the employee A can have the interest in addition to his or her wage. The server 1 may calculate the interest using a unit (not shown) on the basis of the credit transaction information, and add the interest to the employee A's credit limit.

The company B may determine the interest rate for the unpaid wage of the employee A beforehand, and inform the rate to the management C. Otherwise, the management C may determine the interest rate on the basis of a credit research performed by itself or by an outside research agency. Further, the interest rate may be variable for each employee, or may depend upon an amount of an unpaid wage or a length of unpaid period.

As shown in Fig. 3, the credit transaction values are paid in a lump in the foregoing embodiment. Further, the credit transaction values may be paid in installments. The guarantee money calculated on the basis of the credit transaction information includes not only the transaction value in the credit transaction information but also guarantee money which is calculated on the basis of the number of installments.

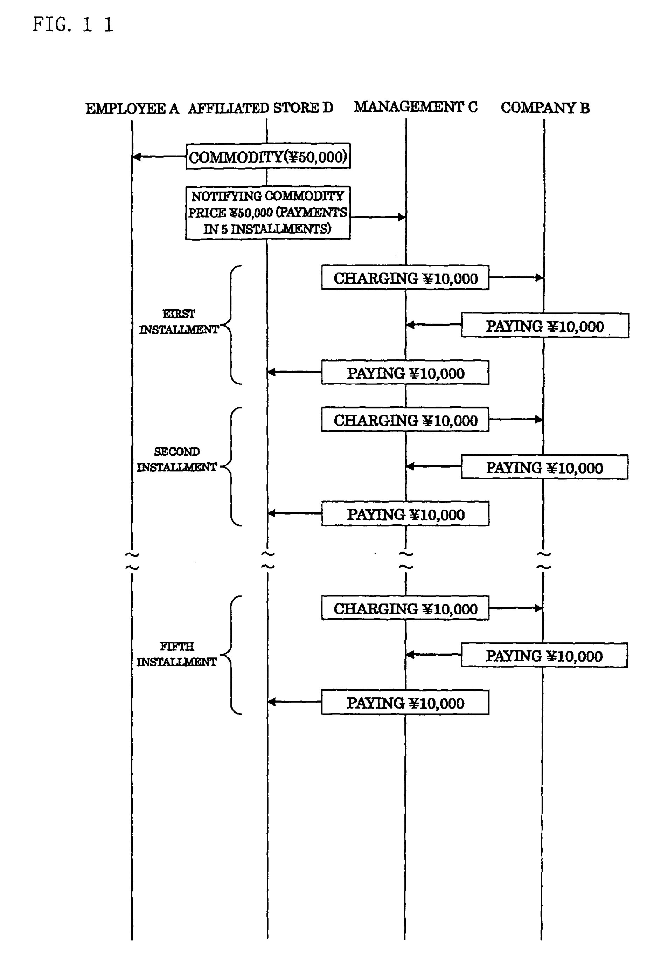

Fig. 11 to Fig. 13 show a second embodiment in which the employee A buys goods (¥50,000) and pay for the goods in five monthly installments.

Referring to Fig. 11, the employee A proposes to the store D to buy goods in the five installments, i.e. the store D allows the employee A to delay the payment. When the store D informs the management C that the cost (¥50,000) of the bought goods is paid in the five installments, the management C charges and receives ¥10,000 monthly to and from the company B, and pays the monthly cost to the store D. In this case, since the delayed payment is accepted, the store D receives money corresponding to an interest from the company B. The company B may deduct the amount corresponding to the interest from the credit limit of the employee A.

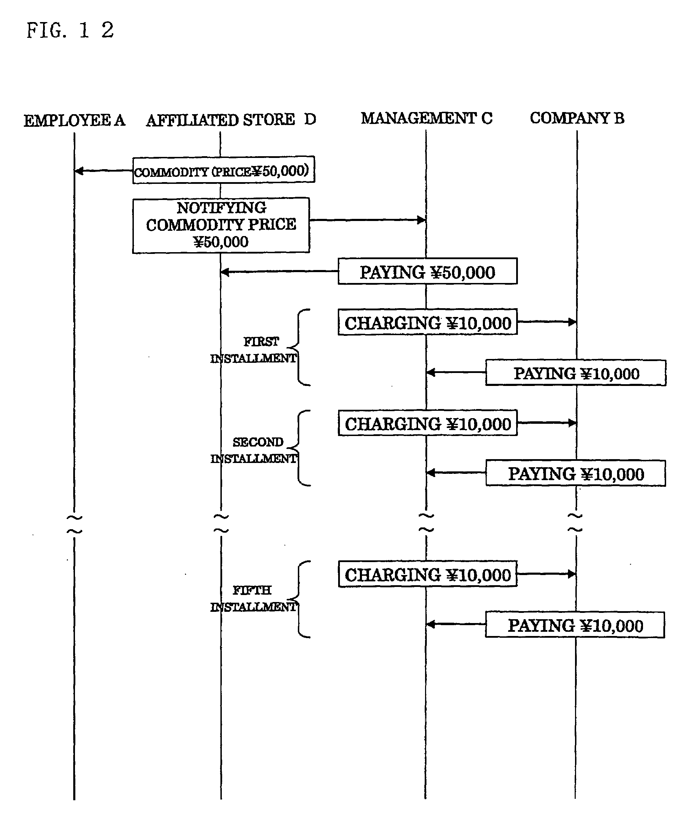

In the example shown in Fig. 12, the management C accepts delayed payment of the company B. In other words, informed of the transaction value of ¥50,000 from the store D, the management C pays ¥50,000, and charges and receives ¥10,000 to and from the company B monthly. In this case, the management C may receive a sum of money corresponding to an interest. The interest may be contributed by the company B.

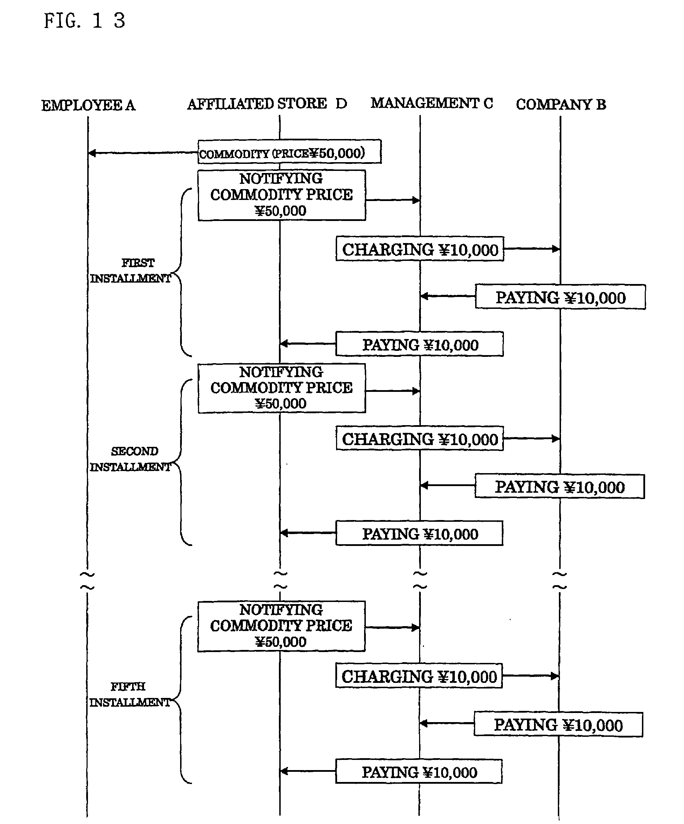

Referring to Fig. 13, the store D divides the cost of ¥50,000 into the five installments, and charges ¥10,000 monthly to the management C. The management C charges and receives ¥10,000 monthly, and pays it to the store D. In this case, the store D may receive money corresponding to the interest from the company B due to the delayed payment. The sum corresponding to the interest may be deducted from the credit limit of the employee A, or may be contributed by the company B independently of the credit limit of the employee A.

In the foregoing embodiments, the employee's wage is exemplified as the counter value. When the cost of purchased goods is a counter value whose payment is to be managed, a purchaser offers to a seller his or her credit limit as accounts payable corresponding to the cost. In such a case, the purchaser is required only to clear up the accounts payable in the credit dealing with the seller. The purchaser is relieved of paying the cost of the purchased goods.

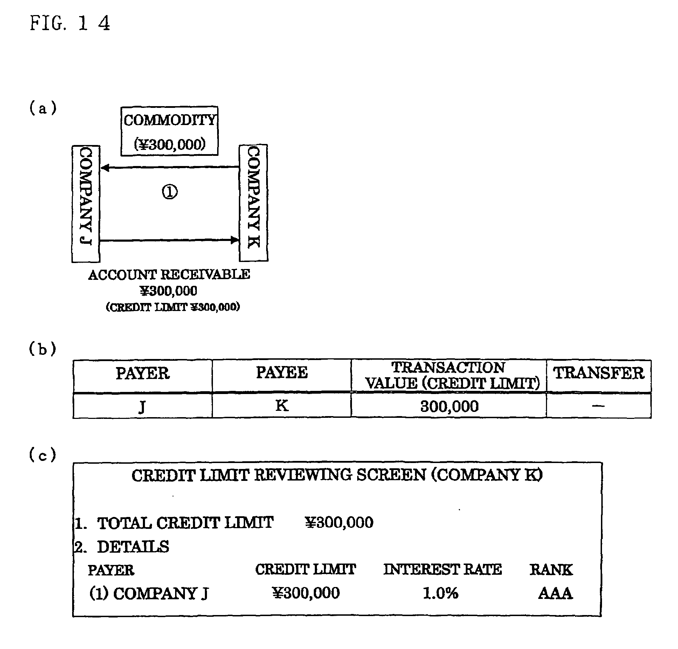

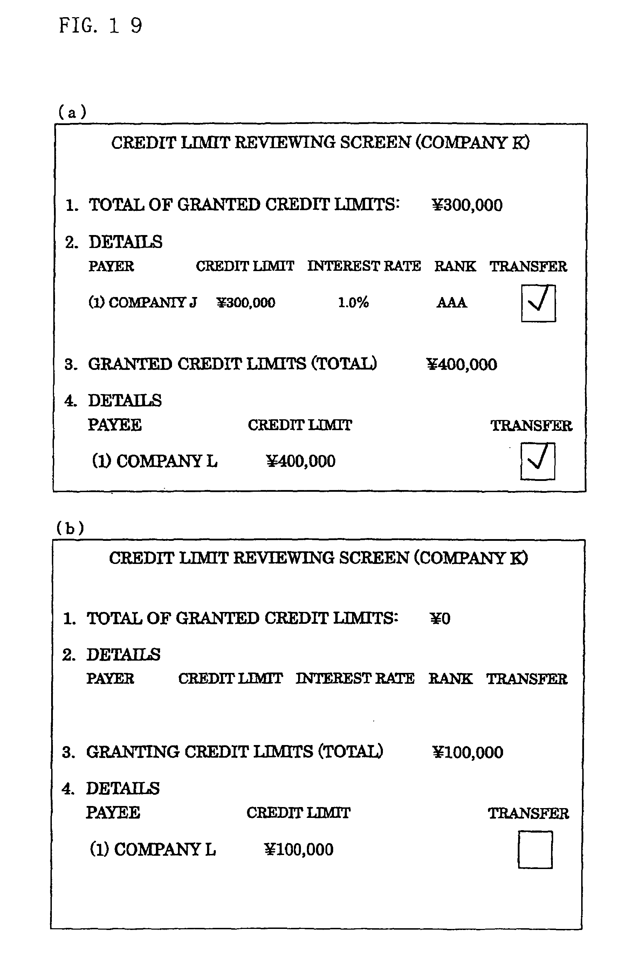

The following describe a procedure in which transfer of a credit limit, i.e. the credit limit goes rolling, is performed with respect to the payment of the cost of commodities, as shown in Fig. 14(a) to Fig. 14(c) to Fig. 19(a) and Fig. 19(b).

Fig. 14(a) shows that a company J purchases a commodity at the cost of ¥300,000 from a company K, and grants a credit limit of ¥300,000 to the company K. The company K makes a credit inquiry concerning the company J to the server 1, and sells the commodity. Referring to Fig, 17, the server 1 has stored credit limits of the companies J and K (step Y1). It is assumed here that the company J has the credit limit beyond ¥300,000 while the company K has the credit limit of ¥0.

The company J uses a card to buy the commodity from the company K as described above (step Y2). The company K gains access to the server 1 in order to make a credit inquiry on the company J (step Y3). The server 1 confirms the credit limit of the company J (step Y4), and informs the company K of the results (step Y5). The company K provides the commodity to the company J (step Y6), and informs the server 1 of the price of the commodity (step Y7). The server 1 updates the credit limits of the companies J and K, i.e. deducts ¥300,000 from the company J's credit limit, and adds ¥300,000 to the company K's credit limit (step Y8).

Fig. 14(b) shows credit transaction information that is managed by the server 1 using a credit limit manager 18. The company J is a payer, the company K is a payee, and the transaction value is ¥300,000. "Transfer" will be described later.

Referring to Fig. 14(c), the server 1 creates a Web screen using the credit limit manager 13 and a unit (not shown) when the business transaction is completed. The Web screen is sent to the company K, and shows that the company K has the credit limit of ¥300,000, and that the payer is the company J. The "interest rate" and the "rank" will be described later.

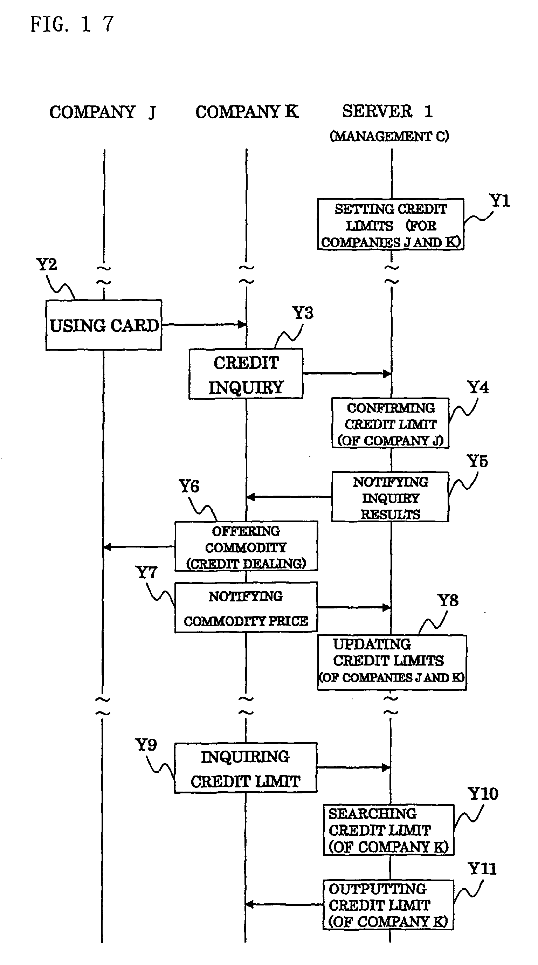

The server 1 receives the credit inquiry from a terminal of the company K (step Y9 in Fig. 17), and searches the credit limit manager 13, extracts the credit limit granted to the company K (step Y10), creates a Web screen (Fig. 14(c)) showing the credit limit, and sends it to the terminal of the company K (step Y11).

The company K can inquire and confirm its own credit limit by gaining access to the server 1.

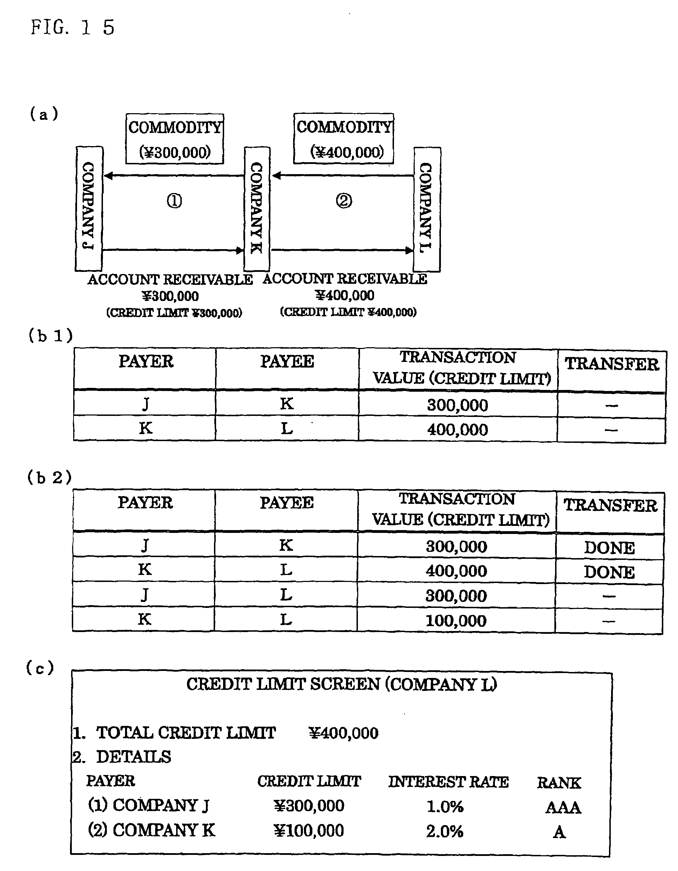

Fig. 15(a) shows that the company K purchased a commodity of ¥400,000 after the business transaction shown in Fig. 14(a), and has granted a credit limit of ¥400,000 to a company L in order to pay for the commodity.

Fig. 15(b1) shows information that is controlled by the server 1 using the credit limit manager 13. In addition to the items shown in Fig. 14(b), the information represents that the company K is a payer, the company L is a payee, and a granted credit limit (corresponding to the credit transaction value) is ¥400,000.

Fig. 15(b2) shows information that is controlled by the credit limit manager 13, i.e. the company K transfers its credit limit of ¥300,000 (granted by the company J) to the company L as a part of the credit limit of ¥400,000. In other words, the credit limit (¥300,000) of the company K is granted to the company L from the company J, so that the company K grants the credit limit (¥100,000) to the company L.

In Fig. 15(b2), the word "done" in the "transfer" column indicates that transfer of the credit limits has been completed. Specifically, the company J's bond (i.e. credit limit) to the company K on the first line in Fig. 15(b2) stops to exist while the company J will pay for the purchased commodity (¥300,000) to the company L specified by the company K, but not to the company K. On line 4, the credit limit of ¥100,000 (=¥400,000 - ¥300,000) is present as a result of transfer.

The server 1 creates a Web screen shown in Fig. 15(c) with reference to the credit limit manager 13 when the business transaction and transfer of the credit limit are completed. The Web screen shows the credit limit granted to the company L, i.e. the credit limit of ¥400,000 is granted to the company L by the payers, the companies J and K. The company J has granted the credit limit of ¥300,000 while the company K has granted the credit limit of ¥100,000.

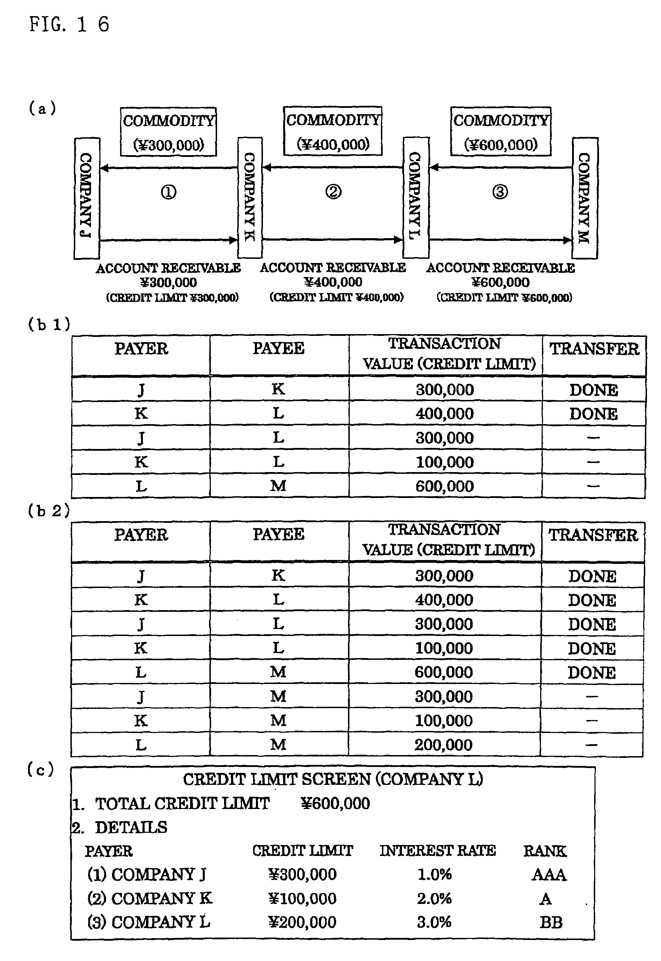

Referring to Fig. 16(a), the company L has purchased a commodity of ¥600,000 from a company M after the business transactions shown in Fig. 14(a) and Fig. 15(a). The company L has granted to the company M a credit limit of ¥600,000 in order to pay for the commodity.

Fig. 16(b1) shows information controlled by the server 1 using the credit limit manager 13. The information includes the payer (company L), payee (company M), transaction values (¥600,000) in addition to the items shown in Figs. 14(a) to 14(c) and Figs. 15(a) to 15(c).

As shown in Fig. 16(b2), the company L has transferred the credit limit ¥300,000 (granted by the company J) and the credit limit ¥100,000 (granted by the company K) to the company M as a part of the transaction value (¥600,000) under the control of the credit limit manager 13. In other words, the companies J, K and L have granted the credit limits of ¥300,000, ¥100,000 and ¥200,000, respectively, to the company M.

The following describe "interest rates" and "ranks" indicated in the credit limit screens shown in Figs. 14(c), 15(c) and 16(c).

In the example shown in Fig. 16(c), the company M reviews the credit limit screen, and can confirm its own credit limit of ¥600,000, the payers, and their credit limits. If the company M purchases a commodity from a third party (including the company J, K or L), the company M can transfer a part or all of its credit limit of ¥600,000 in order to pay for the commodity as described above. The interest rates and ranks are examples of indices for enabling the company M to determine companies whose credit limits should be transferred to pay for the commodity. Interests are paid at predetermined rates for the credit limits set by the payers. Further, the payers are ranked.

Referring to Figs. 14(a) to 14(c) to Fig. 16(a) to 16(c), the company M directly performs business transaction with only the company L, and does not have business transactions with the companies J and K. In other words, the company M has been granted the credit limits from the companies J and K which are payers but are not in direct business with one another. Reviewing the credit limit screen shown in Fig. 16(c), the company M preferentially makes a transfer from the credit limit of a company having a low interest rate or a low rank, which is effective in promoting risk management.

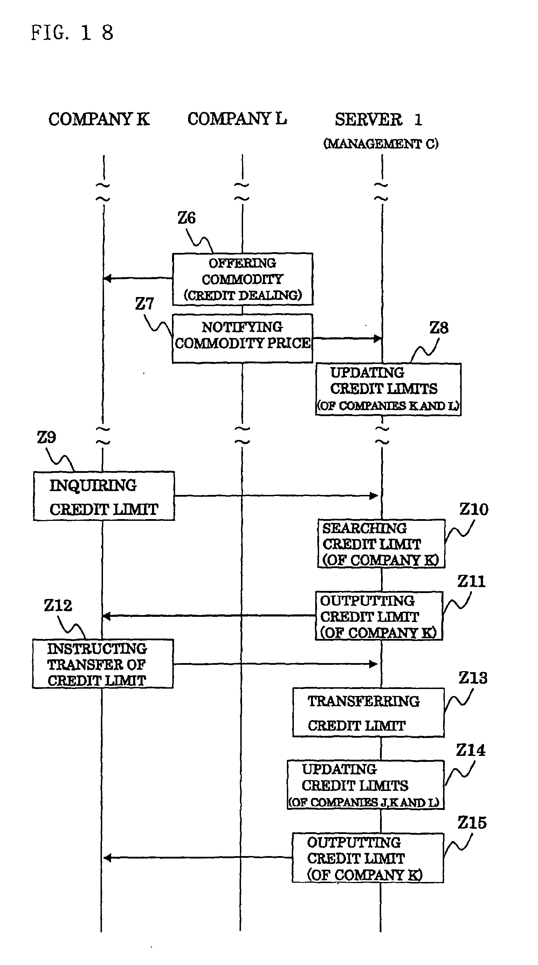

The transfer of the credit limit of Fig. 15(a) is carried out in a procedure shown in the flowchart of Fig. 18.

As described above, the company K has purchased the commodity from the company L, and has granted the credit limit of ¥400,000 to the company L in order to pay for the commodity (steps Z6 to Z8). The company K gains access to the server 1 via its terminal (not shown) in order to inquire its credit limit. Reviewing a credit limit screen of Fig. 19(a), the company K instructs the server 1 to transfer its credit limit to the company L (steps Z9 to Z12). The company K has the credit limit of ¥300,000 (account receivable from the company J), and has granted the credit limit of ¥400,000 (accounts payable to the company L). Further, the whole of the credit limit of ¥300,000 (accounts payable) is transferred as a credit limit corresponding to the accounts receivable. In response to the transfer instructions, the server 1 transfers the credit limits, and updates the information stored in the credit limit manager 13, changes the screen of Fig. 15(b1) to the screen of Fig. 15(b2), creates a screen shown in Fig. 19(b), and sends it to the terminal of the company K. Fig. 19(b) shows that the company K has no credit limit (¥0) granted thereto, but has granted the credit limit of ¥100,000 to the company L.

Alternatively, it is possible for the company K to instruct, on the screens shown in Fig. 19(a) and Fig. 19(b), the transfer and an amount to be transferred.

The transfer may be instructed to the server 1 before or after the business transactions. For instance, it is possible for the server 1 to include a device to register transfer instructions such as "Preferentially transfer a credit limit having a low interest rate." In such a case, when informed of a price to be paid, the server 1 may search the transfer instructions, transfer the credit limit, and update the credit limit.

In the foregoing embodiments, the credit limit granted by the payer to the payee is substantially equal to the counter value which the payee is entitled to receive from the payer (e.g. the credit limit granted by the company B is equal to the wage of the employee A). Alternatively, the invention is applicable to other types of business transactions. It is possible to grant a credit limit which is equal to or more than the counter value to be paid to the payee. This enables the payee to perform more credit dealings beyond the credit limit. For instance, the employee A (payee) may have a credit limit far beyond his or her wage. In such a ease, the wage may be paid to the employee A with the credit limit beyond the wage, which enables the employee A to perform credit dealings beyond his or her wage.

As shown in Fig.1 to Fig. 7, the invention is embodied in the following cases.

### Case 1:

The company B grants to the employee A the credit limit which is substantially equal to his or her wage.

### Case 2:

The company B grants the credit limit to the employee A after examining the employee A.

### Case 3:

The management C examines the company B, and grants a credit limit to the company B. Further, the company B grants to the employee A with all or a part of the credit limit granted by the management C.

### Case 4:

The management C examines the employee A, and may grant to the employee A with an additional credit limit which is independent of the employee's wage.

With Case 2, the company B grants a credit limit of ¥800,000 to the employee A whose monthly wage is ¥500,000. In this case, a balance of ¥300,000 (=¥800,000 - ¥500,000) is a loan from the company B to the employee A. In other words, the company B guarantees the payment of the guarantee money of ¥800,000 at maximum to the management C even when credit dealings involve guarantee money exceeding ¥500,000. In this case, the employee A has to pay back the guarantee money going over ¥500,000 to the company B. Specifically, the balance of ¥300,000 (i.e. the guarantee money paid by the company B to the management C) may be processed as a loan from the management C to the company B or the employee A.

As for Case 3, the management C grants a credit limit of ¥1,000,000 to the company B, and the company B grants a credit limit of ¥800,000 to the employee A by adding ¥300,000 (out of the credit limit ¥1,000,000) to the wage ¥500,000 of the employee A. In this case, the management C may process the balance of ¥300,000 (=¥800,000 - ¥500,000) as a loan to the company B or the employee A. Further, the company B. may process the balance of ¥300,000 as a loan to the employee A.

In Case 4, the company B grants a credit limit of ¥500,000 to the employee A whose wage is ¥500,000. Further, the management C grants a credit limit of ¥300,000 to the employee A (after independently confirming details of the employee A's credit dealings). In this state, the employee A is granted a credit limit of ¥800,000. The balance of ¥300,000 (¥800,000 - ¥500,000) is a loan to the employee A from the management C. In other words, the company B guarantees the payment of the guarantee money of ¥500,000 (i.e. the wage of the employee A) to the management C while the management C guarantees the payment of ¥300,000 to the store D even when the guarantee money for a credit dealing exceeds ¥500,000.

In the foregoing cases, the company B grants the credit limit to the employee A within his or her wage and without collateral. Alternatively, the invention is applicable to cases in which the company B grants an additional credit limit to the employee A by adding a sum of money depending upon the collateral proposed by the employee A, and pays the wage plus the additional credit limit. In such a case, even if no credit limit is granted above the wage, the employee A can have a credit limit above his or her wage.

In Case 1, the credit limit is granted within the wage of the employee A (without collateral).

The following cases are conceivable when granting a credit limit beyond the employee's wage.

### Case 5:

The company B grants a credit limit to the employee A in accordance with the collateral offered by him or her.

### Case 6:

The management C grants a credit limit to the employee A in accordance with the collateral offered by him or her.

### Case 7:

The management C grants a credit limit to the company B in accordance with the collateral offered by the employee A, and the company B grants a part of the credit limit (granted from the management C) to the employee A.

### Case 8:

The management C grants a credit limit to the company B in accordance with the collateral offered by the company B, and the company B grants a part of the credit limit (granted from the management C) to the employee A.

In Case 5, the company B grants the credit limit of ¥800,000 to the employee A (whose wage is ¥500,000) by using the employee A's estate as the collateral of ¥300,000. In this case, the balance of ¥300,000 (= ¥800,000 - ¥500,000) is a loan to the employee A from the company B. In other words, the company B guarantees to the management C the payment up to the guaranty money of ¥800,000 even if credit dealings involve the guarantee money above ¥500,000. However, the employee A has to pay back the sum of money above his or her wage. In this case, the management C may loan the balance of ¥300,000 to the company B or the employee A. Further, the company B may loan ¥300,000 to the employee A.

In Case 6, the company B grants a credit limit of ¥500,000 to the employee A whose wage is ¥500,000. The management C grants a credit limit of ¥300,000 using the employee A's estate as the collateral, so that a total credit limit of ¥800,000 is granted to the employee A. In this case, the management C may loan the balance of ¥300,000 to the company B or the employee A. Further, the company B may loan ¥300,000 to the employee A.

In case 7, the management C grants to the company B a credit limit of ¥1,000,000 by taking the employee's estate as the collateral. The company B grants a credit limit of ¥800,000 by adding ¥300,000 (out of the credit limit of ¥1,000,000) to the employee A's wage. In this case, the management C may loan the balance of ¥300,000 to the company B or the employee A. Further, the company B may loan ¥300,000 to the employee A.

As for Case 8, the management C grants a credit limit of ¥1,000,000 to the company B using the company B's estate as the collateral. The company B grants a credit limit of ¥800,000 to the employee A by adding ¥300,000 (out of the credit limit of ¥1,000,000) to the employee A's wage of ¥500,000. In this case, the management C may loan the balance of ¥300,000 to the company B or the employee A. Further, the company B may loan ¥300,000 to the employee A.

According to the invention, the credit limit above the employee A's wage is not always limited to the examples in Cases 2 to 8.

Alternatively, the examples in Cases 1 to 8 may be combined. For instance, the company B may grant an additional credit limit to the employee A (without collateral) in addition to the credit limit corresponding to the employee A's wage. Further, the management C may grant an additional credit limit to the employee A by taking his or her collateral.

Further, when the employee A performs credit dealing above his or her wage, the company B or the management C may loan an amount of money (exceeding the guarantee money) with interest. In Case 2, when the company B has guaranteed the payment of the guarantee money of ¥600,000, an interest for the balance of ¥100,000 (¥600,000 (credit limit) - ¥500,000 (wage)) may be deducted from the employee A's credit limit of a succeeding month. In such a case, the management C calculates the interest on the basis of details of credit dealing of the employee A which are managed by the server 1, and deducts the interest from the next wage of the employee A. Otherwise, the employee A may pay back the interest to the company B or the management C.

### INDUSTRIAL APPLICABILITY OF THE INVENTION

A payer may grant a credit limit corresponding to a counter value to be paid to a payee, so that payer can pay money to the payee within the counter value whenever the payee wishes. Therefore, the payer is not required to prepare an entire amount of money on a day when the counter value is paid, which relieves the payer from the burden of paying the counter value.

An additional credit limit may be granted beyond the counter value, which enables the payee to make credit dealings above his or her counter value. Namely, the payer can grant a credit limit which is more than the counter value.

## Claims

1. A method of managing the payment of a counter value from a payer to a payee by granting a credit limit corresponding to the counter value, the method being executed by a server which performs the following:
receiving a payee's counter value;
setting a credit limit on the basis of the counter value;
receiving credit transaction information including a transaction value of the payee;
calculating sum of guarantee money to be paid by the payer on the basis of the received credit transaction information; and
updating the credit limit by deducting the calculated guarantee money from the credit limit.

2. A method of managing the payment of a counter value from a payer to a payee by granting a credit limit corresponding to the counter value, method being executed by a server which performs the following:
receiving a payee's counter value;
setting a new credit limit by adding the counter value to a stored credit limit;
receiving credit transaction information including a transaction value of the payee;
calculating sum of guarantee money to be paid by the payer on the basis of the received credit transaction information; and
updating the credit limit by deducting the calculated guarantee money from the credit limit.

3. The method of claim 1 or 2, wherein the server updates the credit limit by deducting the calculated guarantee money from the credit limit only when the guarantee money is equal to or less than the credit limit.

4. The method of any one of claims 1 to 3, wherein the server outputs information necessary for settling the calculated guarantee money.

5. The method of any one of claims 1 to 4, wherein the server confirms the settlement of the guarantee money, and updating the credit limit by deducting the guarantee money from the credit limit.

6. The method of any one of claims 1 to 5, wherein the server receives inquiries concerning credit dealings of the payee, and outputs inquiry results.

7. The method of any one of claims 1 to 6, wherein the server outputs information concerning credit dealings of the payee.

8. A server managing payment of a counter value from a payer to a payee by granting a credit limit corresponding to the counter value, the server comprising:
a receiver receiving a payee's counter value;
a unit setting a credit limit corresponding to the counter value;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

9. A server managing payment of a counter value from a payer to a payee by granting a credit limit corresponding to the counter value, the server comprising:
a receiver a payee's counter value;
a unit setting credit limit by adding the counter value to a stored credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

10. The server of claim 8 or 9 further comprising a unit comparing the calculated guarantee money with the credit limit.

11. The server of any one of claims 8 to 10 further comprising a unit outputting information for settling the calculated guarantee money.

12. The server of any one of claims 8 to 11 further comprising a unit confirming the settlement of the guarantee money.

13. The server of any one of claims 8 to 12 further comprising a receiver receiving credit inquiries, and a unit outputting results of credit inquiries.

14. The server of any one of claims 8 to 13 further comprising a unit outputting information concerning credit dealings of the payee.

15. A program managing payment of a counter value from a payer to a payee by granting a credit limit corresponding to the counter value, the program being executed by a computer functioning as:
a receiver receiving an amount of a counter value of the payee;
a unit setting a credit limit corresponding to the counter value;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

16. A program managing payment of a counter value from a payer to a payee by granting a credit limit corresponding to the counter value, the program being executed by a computer functioning as:
a receiver receiving a payee's counter value;
a unit setting a credit limit by adding the received counter value to a stored credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

17. A computer-readable medium on which a program managing payment of a counter value from a payer to a payee by granting a credit limit corresponding to the counter value is recorded, the program being executed by a computer functioning as:
a receiver receiving a payee's counter value;
a unit setting a credit limit corresponding to the counter value;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

18. A computer-readable medium on which a program managing payment of a counter value from a payer to a payee by granting a credit limit corresponding to the counter value is recorded, the program being executed by a computer functioning as:
a receiver receiving a payee's counter value;
a unit setting a credit limit by adding the counter value to a stored credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

19. A counter value payment managing medium, the medium enabling a computer to manage the payment of a counter value from a payer to a payee by granting a credit limit corresponding to the counter value, and enabling the computer to function as:
a receiver receiving a payee's counter value;
a unit setting a credit limit corresponding to the counter value;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

20. A counter value payment managing medium, the medium enabling a computer to manage the payment of a counter value from a payer to a payee by granting a credit limit corresponding to the counter value, and enabling the computer to function as:
a receiver receiving a payee's counter value;
a unit setting a new credit limit by adding the counter value to a stored credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

21. A method of managing the payment of a counter value from a payer to a payee by granting a credit limit corresponding to the counter value, the method being executed by a server which performs the following:
receiving a payee's counter value and an additional credit limit;
setting a credit limit on the basis of the counter value and the additional credit limit;
receiving credit transaction information including a transaction value of the payee;
calculating sum of guarantee money to be paid by the payer on the basis of the received credit transaction information; and
updating the credit limit by deducting the calculated guarantee money from the credit limit.

22. A method of managing the payment of a counter value from a payer to a payee by granting a credit limit corresponding to the counter value, the method being executed by a server which performs the following:
receiving a payee's counter value and an additional credit limit;
setting a credit limit of the payee by adding the counter value and the additional credit limit to a stored credit limit;
receiving credit transaction information including a transaction value of the payee;
calculating sum of guarantee money to be paid by the payer on the basis of the received credit transaction information; and
updating the credit limit by deducting the calculated guarantee money from the credit limit.

23. The method of claim 21 or 22, wherein the additional credit limit is calculated without collateral.

24. The method of any one of claims 21 to 23, wherein the additional credit limit is calculated on the basis of the payee's actual achievements in credit dealings.

25. The method of any one of claims 21 to 24, wherein the additional credit limit is calculated with collateral possessed by the payee.

26. The method of any one of claims 21 to 25, wherein the additional credit limit is calculated with collateral possessed by the payer.

27. A server managing payment of a counter value from a payer to a payee by granting a credit limit corresponding to the counter value, the server comprising:
a receiver a payee's counter value and an additional credit limit;
a unit setting a credit limit by adding the counter value and the additional credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

28. A server managing payment of a counter value from a payer to a payee by granting a credit limit corresponding to the counter value, the server comprising:
a receiver receiving a payee's counter value and an additional credit limit;
a unit setting a credit limit by adding the counter value and the additional credit limit to a stored credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

29. The method of claim 27 or 28, wherein the additional credit limit is calculated without collateral.

30. The method of any one of claims 27 to 29, wherein the additional credit limit is calculated on the basis of the payee's actual achievements in credit dealings.

31. The method of any one of claims 27 to 30, wherein the additional credit limit is calculated with collateral possessed by the payee.

32. The method of any one of claims 27 to 31, wherein the additional credit limit is calculated with collateral possessed by the payer.

33. A program managing payment of a counter value from a payer to a payee by granting a credit limit corresponding to the counter value, the program being executed by a computer functioning as:
a receiver receiving a payee's counter value and an additional credit limit;
a unit setting a credit limit by adding the counter value and the additional credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

34. A program managing payment of a counter value from a payer to a payee by granting a credit limit corresponding to the counter value, the program being executed by a computer functioning as:
a receiver receiving a payee's counter value and an additional credit limit;
a unit setting a credit limit by adding the counter value and the additional credit limit to a stored credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

35. A computer-readable recording medium on which a program managing payment of a counter value from a payer to a payee by granting a credit limit corresponding to the counter value is recorded, the program being executed by a computer functioning as:
a receiver receiving a payee's counter value and an additional credit limit;
a unit setting a credit limit by adding the counter value and the additional credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

36. A computer-readable recording medium on which a program managing payment of a counter value from a payer to a payee by granting a credit limit corresponding to the counter value is recorded, the program being executed by a computer functioning as:
a receiver receiving a payee's counter value and an additional credit limit;
a unit setting a new credit limit by adding the counter value and the additional credit limit to a stored credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

37. A counter value payment managing medium, the medium enabling a computer to manage the payment of a counter value from a payer to a payee by granting a credit limit corresponding to the counter value, the program being executed by a computer functioning as:
a receiver receiving a payee's counter value of the payee and an additional credit limit;
a unit setting a credit limit by adding the counter value and the additional credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

38. A counter value payment managing medium, the medium enabling a computer to manage the payment of a counter value from a payer to a payee by granting a credit limit corresponding to the counter value, the program being executed by a computer functioning as:
a receiver receiving a payee's counter value of the payee and an additional credit limit;
a unit setting a credit limit by adding the counter value and the additional credit limit to a stored credit limit;
a receiver receiving credit transaction information including a transaction value of the payee;
a unit calculating sum of guarantee money to be paid by the payer on the basis of the received credit transaction information; and
a unit updating the credit limit by deducting the calculated guarantee money from the credit limit.

39. A medium recording a method of managing the payment of a counter value from a payer to a payee by granting a credit limit corresponding to the counter value, wherein the credit limit, a paid counter value and an unpaid counter value are recorded, the paid counter value representing guarantee money guaranteed by a payer to a payee on the basis of an amount of credit dealings of the payee, and the unpaid counter value representing an amount calculated by deducting the paid counter value from the credit limit.

40. The medium of claim 39, wherein the paid counter value is stored together with information concerning the payer.
